(19) Europäisches Patentamt European Patent Office Office européen des brevets

(11) **EP 2 492 711 A1**

(12) **EUROPEAN PATENT APPLICATION**

(43) Date of publication:
29.08.2012 Bulletin 2012/35

(51) Int Cl.:
*G01T 1/02* (2006.01)    *G01T 1/185* (2006.01)
*H01J 47/02* (2006.01)

(21) Application number: 11156039.7

(22) Date of filing: 25.02.2011

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nederlandse Organisatie voor Toegepast -Natuurwetenschappelijk Onderzoek TNO 2628 VK Delft (NL)**

(72) Inventors:
• **Kroes, Renè**
2628 VK Delft (NL)
• **Wieringa, Fokko Pieter**
2628 VK Delft (NL)
• **Hoppenbrouwers, Marcus Benedictus**
2628 VK Delft (NL)

(74) Representative: **Jansen, Cornelis Marinus et al VEREENIGDE Johan de Wittlaan 7 2517 JR Den Haag (NL)**

(54) **An ionization chamber**

(57)    The invention relates to an ionization chamber (10) comprising an inner spherical electrode (2), an outer spherical electrode (4), a space between the inner spherical electrode and the outer spherical electrode, and a resistive hollow body (3) provided in the said space, wherein electrical connections to the inner spherical electrode and electrical connection to the top of the resistive hollow body (3) are electrostatically screened by that same resistive hollow body having a continuously varied local resistance along its axis. The invention further relates to a method of manufacturing an ionization chamber.

Fig. 1

EP 2 492 711 A1

**Description**

Field of the invention

The invention relates to an ionization chamber, in particular the invention relates to a spherical ionization chamber.

The invention further relates to a method of manufacturing an ionization chamber.

Background of the invention

Spherical ionization chambers are known per se. For example, CN 101526622 describes a detector device for radiation monitoring, which comprises an ionization chamber part comprising a shell and an electrode part, a circuit part for processing electrical signals from the electrode part, and a metal seal box, wherein the circuit part is arranged in the metal seal box. The known spherical ionization chamber is filled with a gas in a volume between the inner electrode and the outer electrode.

Such spherical ionization chambers may be used for dosimetry purposes for enabling measurements without directional sensitivity. However, it is found that such spherical ionization chambers do demonstrate directional sensitivity in strong external magnetic fields, such as the magnetic fields present in a magnetic resonance apparatus, cyclotron or fusion reactor.

In particular, it appears that the electrical connection, necessary for providing voltage to the inner spherical electrode, distorts the otherwise spherical electrical field distribution between the inner electrode and the outer electrode.

Summary of the invention

It is an object of the invention to provide a spherical ionization chamber for use in relatively strong magnetic fields, such as those of a magnetic resonance apparatus, wherein distortion of the E-field is avoided or is substantially mitigated.

To this end an ionization chamber according to the invention comprises an inner spherical electrode, an outer spherical electrode, a space between the inner spherical electrode and the outer spherical electrode, and a resistive hollow body provided in the said space, wherein electrical connections to the inner spherical electrode and electrical connection to the top of a resistive hollow body are electrostatically screened by that same resistive hollow body having a continuously varied local resistance along its axis.

It will be appreciated that by way of its functioning the spherical ionization chamber always comprises a necessary electrical connection to the inner electrode.

It is found that by providing a resistive body extending substantially radially between the inner surface of the outer spherical electrode and the inner spherical electrode, thereby screening the electrical connection to the inner electrode, the distortion of the E-field caused by said connection may be mitigated or substantially overcome. The continuously varied local resistance of the resistive body is adapted to mimic the spatial electrostatic potential characteristics that would be present between the charged inner spherical electrode and the outer spherical electrode. In this way the resulting ionization chamber is highly immune to magnetic fields.

To achieve this, it is clear that the electrical resistance should depend on the radius r along the resistive body. Usually such resistive body is relatively thin, i.e. comparable with he dimensions of the electrical wire used to enable electrical connection to the inner electrode. In order to derive how, we consider the system of charged conductors only, because this is exactly what has to be "mimicked" by the resistive body.

This simplifies the system to an inner charged small sphere with a radius 'a' at an electric potential $V_a$, being located at the centre of a larger hollow conducting sphere with inner radius 'b'.

For a < r < b the associated electrical potential

$$V(r) = V_a \cdot R_a \cdot \left( \frac{1 - \dfrac{R_b}{r}}{R_a - R_b} \right).$$

Accordingly, at a given r the local resistance of the resistive layer around a thin central pole should be inverse proportional to the distance from the centre. The electrical potential at point r along the pole can be regarded as the wiper of a potentiometer.

The power dissipation in the resistive pole should be limited. With a typical driving voltage of 1000V and a resistive pole of total $10^7$ $\Omega$ the pole current would be limited to 100 micro ampere and the dissipated power to 100 mW.

Any material to manufacture high voltage electrical resistive components according to the present art can be used. Some non-limiting examples are: carbon, metal films or slightly conductive polymers. The desired distance dependent resistance can e.g. be achieved by varying the layer thickness inversely to the distance.

It will be appreciated that those skilled in the art readily appreciate how to calculate necessary values of the varied resistance for spherical ionization chambers having different geometrical and electric characteristics.

In an embodiment of the ionization chamber according to the invention the resistive body has a larger dimension at its base portion on the outer spherical electrode and a smaller dimension at its top near the inner spherical electrode. Preferably, the dimension of the base is about 5 mm and the dimension of the top is about 1 mm. Due to the fact that the resistive body is adapted to restore the spherical symmetry of the E-field between the inner electrode and the outer electrode, a value of the resistance at the top of the resistive body is larger than a value of the resistance and the base of the resistive body.

In a further embodiment of the ionization chamber according to the invention, the top of the resistive body is connected to the inner spherical electrode by an insulator.

It is found to be advantageous to provide a relatively stiff connection between the top portion of the resistive body and the inner electrode for preserving radial orientation of the resistive body inside the ionization chamber.

A method for manufacturing an ionization chamber according to the invention comprises the steps of:

- providing an inner spherical electrode, an outer spherical electrode, a space between the inner spherical electrode and the outer spherical electrode and a hollow resistive body in said space;
- screening an electrical connection to the inner spherical electrode and to the top of the hollow resistive body using the same hollow resistive body having a continuously varied local resistance, wherein said resistive body is radially arranged in said space between an inner surface of the outer spherical electrode and the inner spherical electrode.

Further advantageous embodiments of the method according to the invention are set forth in claims 8-11.

These and other aspects of the invention will be discussed in more detail with reference to the figures, wherein like reference signs relate to like elements.

Brief description

Figure 1 presents in a schematic way an embodiment of a cross-section of the spherical ionization chamber according to the invention.

Figure 2 presents in a schematic way an embodiment of a cut-away of the spherical ionization chamber according to the invention.

Figure 3 presents in a schematic way an embodiment of the resistive body according to the invention.

Detailed description

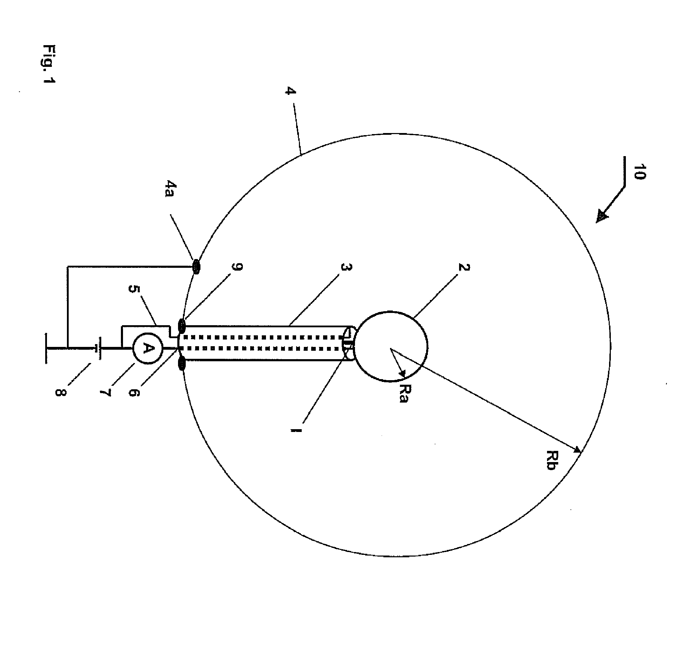

Figure 1 presents in a schematic way an embodiment of a cross-section of the spherical ionization chamber according to the invention. The ionization chamber 10 is a so-called spherical ionization chamber, wherein the inner spherical electrode 2, having the radius $r_a$ is concentrically arranged with respect to the outer spherical electrode 4 having the respective radius $r_b$. The inner spherical electrode 2 is connected by suitable wires 5, 6 to a voltage source 8. The lead wires 5, 6 carry the same potential but are different in function. The wire 5 provides the potential for the hollow resistive body 3 for enabling correction of the E-field. The wire 6 carries the ionization current which is to be measured. The top portion of the hollow resistive body 3 must be electrically isolated from the inner spherical electrode 2. The outside of the resistive body 3 has to be electrically isolated for preventing any space charge from leaking through the body 3. The hollow resistive body 3 may be manufactured from a limited number of individual resistors, from a slightly conductive material formed to a correct shape for obtaining a continuous variation in local resistance, or from a non-conductive pole covered with different purposefully provided layers of conductive material for obtaining a structure having a semi-continuous change in local resistance. The potential from the voltage source 8 is provided to the outer spherical electrode using connection 4a.

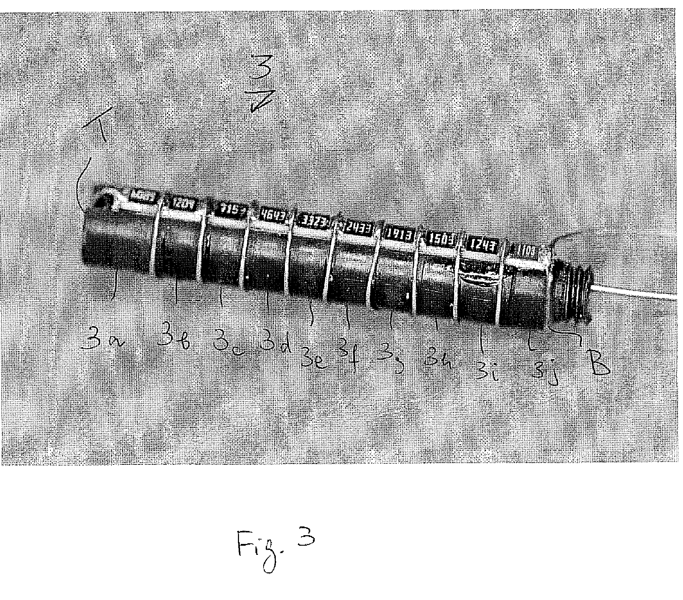

In accordance with the invention a hollow resistive body 3 is provided between the inner surface of the outer spherical electrode 4 and the inner spherical electrode 2. The resistive body 3 is adapted with a suitable set of variable resistances for screening the wires 5, 6 and for maintaining the radial potential between the inner electrode 2 and the outer electrode 4 which corresponds to an unperturbed situation. The wire 6 may comprise an amperemeter for retrieving an electrical signal characterizing the ionization within the chamber 10 during use. More details on the hollow resistive body 3 will be discussed with reference to Figure 3.

The hollow resistive body 3 is electrically connected to the outer spherical electrode 4 at a base portion 9 of the body 3. The hollow resistive body 3 may be mechanically connected to the inner electrode 2 by means of a support member I using a highly isolating material for maintaining the radial orientation of the resistive body 2. It will be appreciated that the support member I is electrically isolated from both the inner electrode and wire 5 connecting the top of the resistive body to the voltage source 8. It is also appreciated that the outside of the resistive body is electrically insulated from the environment.

The electrical resistance in the resistive body in according to the invention depends on the radius r along the resistive body. In order to derive the suitable local values of the resistances a system of charged conductors may be considered, because this is exactly what has to be mimicked by the resistor body 3.

This simplifies the system to an inner charged small sphere with a radius 'a' carrying a charge 'q', being located at the centre of a larger hollow conducting sphere with inner radius 'b'.

The electric potential for this system of nested spheres is given by:

$$V(r) = V_a - \frac{V_a - V_b}{\dfrac{1}{R_b} - \dfrac{1}{R_a}} \cdot \left( \frac{1}{r} - \frac{1}{R_a} \right) \tag{1}$$

As the absolute potential is arbitrary, one may set $V_b = 0V$ so that:

$$V(r) = V_a \cdot R_a \cdot \left( \frac{1 - \dfrac{R_b}{r}}{R_a - R_b} \right). \tag{2}$$

Accordingly, at a given r the local resistance of the resistive layer around the thin central body 3 should be inversely proportional to the distance from the centre. The electrical potential at point r along the pole can be regarded as the wiper of a potentiometer.

The resulting resistive ladder has to reproduce this potential at the nodes between the resistors. In en embodiment where the resistive pole is comprised of a finite number of N resistors, the voltage at the node N is given by

$$V_j = \frac{\displaystyle\sum_{k=1}^{j} R_k}{\displaystyle\sum_{k=1}^{N} R_k} \cdot V_a. \tag{3}$$

The combination of (2) and (3) gives (N-1) non-trivial equations for the N unknown values of $R_j$. So the solution to that set of linear equations gives the relative values of all resistors. To obtain absolute values for all resistors and extra equation has to be added that sets the total current through the resistors.

The power dissipation in the resistive pole should be limited. With a typical driving voltage of 1000V and a resistive pole of total $10^7 \, \Omega$ the pole current would be limited to 100 micro ampere and the dissipated power to 100 mW.

The physical size of the resistors that is chosen determines the maximum values of N. Of course, the larger N, the better the approximation is of the node voltages to the real potential. Another approximation arrives from the limited choice of commercially available resistance values. For example for ra = 2.5mm and rb = 25mm and a total resistance of about $10^7 \Omega$, the following commonly available resistance values may be used:

R1 = 107 kOhm
R2 = 124 kOhm
R3 = 150 kOhm
R5 = 243 kOhm
R6 = 332 kOhm
R7 = 464 kOhm
R8 = 715 kOhm
R9 = 1 MOhm
R10 = 6 MOhm.

In another embodiment one may use layers of resistive coating instead of physical resistors. The layer thickness would change as a function of r in order to obtain the correct potential at every location r. Any material to manufacture high voltage electrical resistive components according to the present art can be used. Some non-limiting examples are: Carbon, metal films or slightly conductive polymers.

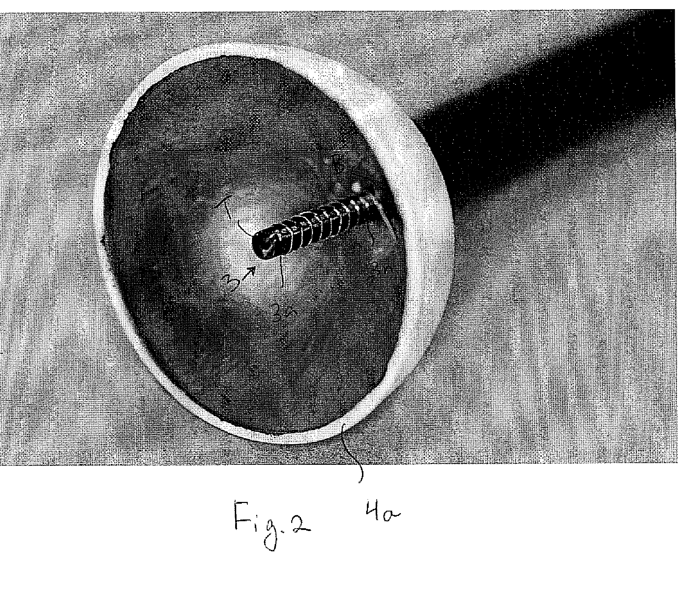

Figure 2 presents in a schematic way an embodiment of a cut-away of the spherical ionization chamber according to the invention. In this view only a lower half 4a of the outer ionization chamber is shown. The resistive body 3 is connected at its base portion B to the inner surface of the outer ionization chamber 4a. The top portion T of the resistive body 3 is provided adjacent the inner electrode (not shown for clarity).

In accordance with the invention the resistive body 3 is provided with a series of individual resistors 3a, ... 3n, wherein the value of a resistor arranged at the top portion is continuously decreasing to a lower value 3n.

It is also possible to provide a variation in dimension of the resistive body for achieving the result of a continuously varying resistance. For example, a cross-sectional dimension of the resistive body 3 at the top portion T may be larger than a cross-sectional dimension of the resistive body at the base portion. In this case the resistive body may be manufactured from the same material, as the difference in the local resistance will be attributed to a local difference in a volume of the material. A suitable material for manufacturing the resistive body is carbon, metal film or a slightly conductive polymer.

Figure 3 presents in a schematic way an embodiment of the resistive body 3 according to the invention. It this embodiment the resistive body 3 comprises portions of the individual resistances 3a, 3b, 3c, 3d, 3e, 3f, 3g, 3h, 3i, 3j. It will be appreciated, however, that a different number of the resistive elements may be used. The local resistance 3a at the top portion of the resistive body is larger that the local resistance 3j at the base portion of the resistive body 3. Preferably, the values of the individual resistances depend inverse proportionally to the distance r from the centre of the ionization chamber.

While specific embodiments have been described above, it will be appreciated that the invention may be practiced otherwise than as described. The descriptions above are intended to be illustrative, not limiting. Thus, it will be apparent to one skilled in the art that modifications may be made to the invention as described in the foregoing without departing from the scope of the claims set out below.

**Claims**

1. An ionization chamber comprising an inner spherical electrode, an outer spherical electrode, a space between the inner spherical electrode and the outer spherical electrode, and a resistive hollow body provided in the said space between the inner spherical electrode and the outer spherical electrode, wherein electrical connections to the inner spherical electrode and electrical connection to the top of a resistive hollow body are electrostatically screened by that same resistive hollow body having a continuously varied local resistance along its axis.

2. The ionization chamber according to claim 1, wherein the resistive body has a tapered rod shape.

3. The ionization chamber according to any one of the preceding claims, wherein the continuously varied local resistance is adapted to enable a substantially undisturbed radial potential between the inner spherical electrode and the outer spherical electrode.

4. The ionization chamber according to claim 3, wherein a value of the local resistance at the top is larger than a value of the local resistance at the base of the resistive body.

5. The ionization chamber according to any one of the preceding claims, wherein the top of the resistive body is connected to the inner spherical electrode by an insulator.

6. The ionization chamber according to any one of the preceding claims, wherein the resistive body extends substantially radially between the outer electrode and the inner electrode.

7. A method for manufacturing an ionization chamber, comprising the steps of:

- providing an inner spherical electrode, an outer spherical electrode, a space between the inner spherical electrode and the outer spherical electrode and a hollow resistive body in said space;
- screening an electrical connection to the inner spherical electrode and to the top of the hollow resistive body using the same hollow resistive body having a continuously varied local resistance, wherein said resistive body is radially arranged in said space between an inner surface of the outer spherical electrode and the inner spherical electrode.

8. The method according to claim 7, wherein the resistive body has a larger dimension at its base portion on the outer spherical electrode and a smaller dimension at its top near the inner spherical electrode.

9. The method according to claim 7 or 8, wherein the continuously varied local resistance is adapted to enable a substantially radial equipotential distribution between the inner spherical electrode and the outer spherical electrode.

10. The method according to claim 9, wherein a value of the resistance at the top is larger than a value of the resistance at the base of the resistive body.

11. The method according to any one of the preceding claims 7 - 10, wherein the top of the resistive body is connected to the inner spherical electrode by an insulator.

Fig. 1

Fig.2

Fig. 3

Europäisches
Patentamt

European
Patent Office

Office européen
des brevets

# EUROPEAN SEARCH REPORT

Application Number

EP 11 15 6039

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KIM H S ET AL: "Performance of a high-pressure xenon ionization chamber for environmental radiation monitoring", RADIATION MEASUREMENTS, ELSEVIER, AMSTERDAM, NL, vol. 43, no. 2-6, 1 February 2008 (2008-02-01), pages 659-663, XP022733885, ISSN: 1350-4487, DOI: DOI:10.1016/J.RADMEAS.2007.12.040 [retrieved on 2008-01-05] * abstract; figures * * page 661, left-hand column, line 14 - page 662, left-hand column, line 4 * | 1-11 | INV. G01T1/02 G01T1/185 H01J47/02 |
| A | HOENEN F ET AL: "Digital pulse processing with high-throughput and high-resolution neutron spectroscopy on DD fusion plasmas with spherical ionization chambers", NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 498, no. 1-3, 11 February 2003 (2003-02-11), pages 470-481, XP004409618, ISSN: 0168-9002, DOI: DOI:10.1016/S0168-9002(02)02074-0 * abstract; figures * * page 471, paragraph 2.1 * * page 473, paragraph 3.2 - page 474 * | 1-11 | |
| A,D | CN 101 526 622 A (UNIV TSINGHUA) 9 September 2009 (2009-09-09) * figures * | 1-11 | |
| A | AT 369 553 B (OESTERR FORSCH SEIBERSDORF [AT]) 10 January 1983 (1983-01-10) * page 6, line 46; figure 5 * | 1-11 | |

**TECHNICAL FIELDS SEARCHED (IPC)**

G01T
H01J

The present search report has been drawn up for all claims

| Place of search | Date of completion of the search | Examiner |
|---|---|---|
| The Hague | 15 July 2011 | Eberle, Katja |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or after the filing date
D : document cited in the application
L : document cited for other reasons

   ....................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 15 6039

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2011

| Patent document cited in search report | | | Publication date | Patent family member(s) | Publication date |
|---|---|---|---|---|---|
| CN 101526622 | A | | 09-09-2009 | NONE | |
| AT 369553 | B | | 10-01-1983 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101526622